(19) Europäisches Patentamt
European Patent Office
Office européen des brevets

(11) **EP 2 856 097 B1**

(12) **EUROPÄISCHE PATENTSCHRIFT**

(45) Veröffentlichungstag und Bekanntmachung des Hinweises auf die Patenterteilung:
**07.08.2019 Patentblatt 2019/32**

(51) Int Cl.:
***G01L 1/24*** (2006.01)          ***G01L 1/26*** (2006.01)

(21) Anmeldenummer: **13726797.7**

(22) Anmeldetag: **04.06.2013**

(86) Internationale Anmeldenummer:
**PCT/EP2013/061503**

(87) Internationale Veröffentlichungsnummer:
**WO 2013/182570 (12.12.2013 Gazette 2013/50)**

(54) **VERFAHREN ZUR KOMPENSATION VON FASEROPTISCHEN MESSSYSTEMEN UND FASEROPTISCHES MESSSYSTEM**

METHOD OF COMPENSATING OPTICAL FIBER MEASURING SYSTEMS AND OPTICAL FIBER MEASURING SYSTEMS

MÉTHODE POUR COMPENSER DES SYSTÈMES DE MESURE AUX FIBRE OPTIQUE ET SYSTÈMES DE MESURE AUX FIBRE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.06.2012 DE 102012104877**

(43) Veröffentlichungstag der Anmeldung:
**08.04.2015 Patentblatt 2015/15**

(73) Patentinhaber: **fos4X GmbH**
**81371 München (DE)**

(72) Erfinder:
• **BUCK, Thorbjörn**
**80636 München (DE)**

• **HOFFMANN, Lars**
**80796 München (DE)**
• **MÜLLER, Mathias**
**82194 Gröbenzell (DE)**
• **WOJTECH, Rolf**
**80689 München (DE)**

(74) Vertreter: **Zimmermann & Partner**
**Patentanwälte mbB**
**Postfach 330 920**
**80069 München (DE)**

(56) Entgegenhaltungen:
**WO-A1-02/090893     US-A1- 2003 141 440**

EP 2 856 097 B1

**Beschreibung**

TECHNISCHES GEBIET

Die vorliegende Anmeldung betrifft allgemein eine optische Messvorrichtung zur Erfassung von Messgrößen mittels in optischen Fasern eingebetteter Sensoren, und betrifft insbesondere ein Verfahren zur Kompensation in faseroptischen Messsystemen. Ferner betrifft die vorliegende Anmeldung ein faseroptisches Messsystem zur Durchführung eines Kompensationsverfahrens.

STAND DER TECHNIK

In hochpräzisen Messsystemen gewinnen faseroptische Sensoren zunehmend an Bedeutung. Hierbei werden ein oder mehrere in Lichtwellenleiter eingebettete Sensoren, wie beispielsweise Faser-Bragg-Gitter, herangezogen, um durch mechanische Größen hervorgerufene Dehnungen der optischen Faser zu erfassen, und um damit die Kräfte, Drehmomente, Belastungen, Druckzustände etc. detektieren zu können.

Die in Fasersensoren integrierten Sensorelemente werden mit optischer Strahlung in einem geeigneten Wellenlängenbereich bestrahlt, wobei in Abhängigkeit von der Auslegung des Sensorelements und der auf das Sensorelement einwirkenden mechanischen Größe ein Teil des eingestrahlten Lichts vom Sensor zurückgeworfen wird und einer Auswerte- und Analyseeinheit zugeführt werden kann. Durch die einwirkende Kraft wird der Lichtwellenleiter gedehnt, und eine Reflexions- bzw. Transmissionswellenlänge des Faser-Bragg-Gitters ändert sich. Diese Wellenlängenänderung kann in der Analyseeinheit untersucht und zur Detektion von mechanischen Einflüssen auf das Sensorelement herangezogen werden.

Die Intensität und/oder der Wellenlängenbereich der am Sensorelement reflektierten optischen Strahlung bzw. der durch das Sensorelement transmittierten optischen Strahlung weisen nun Merkmale auf, die durch die aufgebrachte mechanische Größe beeinflusst werden. Die in die optische Sensorfaser integrierten faseroptischen Sensorelemente sind u.a. empfindlich auf Dehnungen der Sensorfaser, wodurch das von dem von dem Sensorelement reflektierte oder das durch das Sensorelement transmittierte Wellenlängenspektrum beeinflusst wird.

Das Dokument WO 02/090893 A1 beschreibt ein Sensorsystem mit einem ersten Faser-Bragg-Gitter und einem zweiten Faser-Bragg-Gitter, wobei mittels eines Referenzsignals an einem Faser-Bragg-Gitter eine Temperatur und an dem zweiten Faser-Bragg-Gitter eine Dehnung gemessen werden.

Dehnungen der optischen Faser und damit des optischen Sensorelements in der Faser und/oder Veränderungen der Faser-Bragg-Gitter-Struktur hängen nunmehr nicht nur von der zu messenden mechanischen Größe, wie beispielsweise der Kraft, ab, sondern können auch durch unerwünschte Störgrößen, wie beispielsweise Temperaturschwankungen, beeinflusst werden. Es ist somit wünschenswert, Störgrößen, die sich auf die Messgenauigkeit bei der Erfassung der Sollgrößen auswirken, zu eliminieren oder zumindest zu unterdrücken.

ZUSAMMENFASSUNG DER ERFINDUNG

Die vorliegende Erfindung stellt ein Verfahren zur Kompensation bei faseroptischen Messvorrichtungen gemäß Anspruch 1 bereit. Ferner stellt die vorliegende Erfindung eine temperaturkompensierte faseroptische Messvorrichtung mit den Merkmalen des unabhängigen Anspruchs 6 bereit.

Gemäß einer Ausführungsform stellt die vorliegende Erfindung ein Verfahren zur Kompensation, zum Beispiel zur Temperaturkompensation, eines zur Erfassung einer mechanischen Größe ausgelegten faseroptischen Messsystems, einschließend ein Bereitstellen, in dem faseroptischen Messsystem, eines ersten und mindestens eines zweiten Faser-Bragg-Gitters, welches jeweils eine Bragg-Wellenlänge aufweist; ein Bestrahlen der Faser-Bragg-Gitter mit Primärlicht; ein Beaufschlagen der ersten und zweiten Faser-Bragg-Gitter mit der mechanischen Größe derart, dass die Bragg-Wellenlängen der Faser-Bragg-Gitter durch die mechanische Größe verändert werden, wobei das erste und mindestens zweite Faser-Bragg-Gitter im Wesentlichen in gleichem Maß mit einer Größe (A) beeinflusst werden und in einem unterschiedlichen Maß mit der mechanischen Größe (B) beeinflusst werden; ein Filtern von durch das Primärlicht hervorgerufenem und durch die Bragg-Wellenlänge der Faser-Bragg-Gitter in Abhängigkeit von der mechanischen Größe modifiziertem ersten und zweiten Sekundärlicht mittels einer optischen Filtereinrichtung mit einer ansteigenden und einer abfallenden Filterflanke, wobei die Bragg-Wellenlänge des ersten Faser-Bragg-Gitters im Bereich der ansteigenden Filterflanke und die Bragg-Wellenlänge des zweiten Faser-Bragg-Gitters im Bereich der abfallenden Filterflanke der optischen Filtereinrichtung liegt; ein Erfassen der Intensitäten des gefilterten ersten und zweiten Sekundärlichts; ein Auswerten der erfassten Intensitäten des gefilterten ersten und zweiten Sekundärlichts, wobei das Auswerten der erfassten Intensitäten des gefilterten ersten und zweiten Sekundärlichts eine Summenbildung der Intensität des erste Sekundärlichts und der Intensität des zweiten Sekundärlichts umfasst; und ein Bestimmen der mechanischen Größe aus der Intensitätsauswertung.

Gemäß einer weiteren Ausführungsform stellt die vorliegende Erfindung eine faseroptische Messvorrichtung zur Erfassung einer mechanischen Größe bereit, einschließend ein erstes und mindestens ein zweites Faser-Bragg-Gitter, welches jeweils eine von der aufgebrachten mechanischen Größe abhängige Bragg-Wellenlänge aufweist, wobei das erste und mindestens zweite Faser-Bragg-Gitter angeordnet ist, um im Wesentlichen in gleichem Maß mit einer Größe (A) beeinflusst zu werden und in einem unterschiedlichen Maß mit der mechanischen Größe (B) beeinflusst zu werden; eine Primärlichtquelle zur Bestrahlung der Faser-Bragg-Gitter mit Primärlicht; eine optische Filtereinrichtung zur Filterung von durch das Primärlicht hervorgerufenem und durch die Bragg-Wellenlängen modifiziertem, aus den ersten und zweiten Faser-Bragg-Gittern austretenden ersten und zweiten Sekundärlicht, wobei die optische Filtereinrichtung mindestens eine ansteigende und mindestens eine abfallende Filterflanke aufweist, und wobei die Bragg-Wellenlänge des ersten Faser-Bragg-Gitters im Bereich der ansteigenden Filterflanke und die Bragg-Wellenlänge des zweiten Faser-Bragg-Gitters im Bereich der abfallenden Filterflanke der optischen Filtereinrichtung liegt; und eine optische Detektionseinrichtung zur Erfassung der Intensitäten des gefilterten ersten und zweiten Sekundärlichts; und eine Auswerteeinheit zum Auswerten der erfassten Intensitäten des gefilterten ersten und zweiten Sekundärlichts und zum Bestimmen der mechanischen Größe aus der Intensitätsauswertung, wobei die Auswerteeinheit und/oder die optische Detektionseinheit für eine Summenbildung der Intensität des erste Sekundärlichts und der Intensität des zweiten Sekundärlichts angepasst ist.

KURZE BESCHREIBUNG DER ZEICHNUNGEN

Ausführungsbeispiele sind in den Zeichnungen dargestellt und in der nachfolgenden Beschreibung näher erläutert. In den Zeichnungen zeigen:

Figur 1    eine Sensorfaser, welche ein als ein Faser-Bragg-Gitter ausgebildetes integriertes Sensorelement zur Messung einer Faserdehnung enthält;

Figur 2    eine Sensorreflexionsantwort, die hervorgerufen ist durch ein in Fig. 1 dargestelltes integriertes Sensorelement innerhalb der Faser;

Figur 3    ein schematisches Blockbild einer faseroptischen Messvorrichtung mit Lichtquelle, Faserkoppler und Detektionsanordnung, gemäß einem Ausführungsbeispiel;

Figur 4    ein Blockbild eines temperaturkompensierten faseroptischen Messsystems gemäß einem weiteren Ausführungsbeispiel;

Figur 5    Filtertransmissionskurven als Funktion der Wellenlänge und erhaltene Signalamplituden für unterschiedliche Belastungsfälle, zusammengefasst in Filterdiagrammen, gemäß noch einem weiteren Ausführungsbeispiel; und

Figur 6    ein Flussdiagramm zur Veranschaulichung eines Verfahrens zur Temperaturkompensation eines zur Erfassung einer mechanischen Größe ausgelegten faseroptischen Messsystems, gemäß noch einem weiteren Ausführungsbeispiel.

In den Zeichnungen bezeichnen gleiche Bezugszeichen gleiche oder funktionsgleiche Komponenten oder Schritte.

WEGE ZUR AUSFÜHRUNG DER ERFINDUNG

Im Folgenden wird detaillierter Bezug genommen auf verschiedene Ausführungsformen der Erfindung, wobei ein oder mehrere Beispiele in den Zeichnungen veranschaulicht sind.

Ausführungsformen der vorliegenden Erfindung, die hierin beschrieben sind, betreffen u.a. ein Verfahren zur Kompensation, z.B. zur Temperaturkompensation eines zur Erfassung einer mechanischen Größe ausgelegten faseroptischen Messsystems. In dem faseroptischen Messsystem werden ein erstes und mindestens ein zweites Faser-Bragg-Gitter bereitgestellt, die jeweils eine Bragg-Wellenlänge aufweisen. Die Faser-Bragg-Gitter werden mit Primärlicht bestrahlt und mit der mechanischen Größe derart beaufschlagt, dass die Bragg-Wellenlängen der Faser-Bragg-Gitter durch die mechanische Größe verändert werden.

Nach einem Filtern von durch das Primärlicht hervorgerufenem und durch die Bragg-Wellenlänge der Faser-Bragg-Gitter in Abhängigkeit von der mechanischen Größe modifiziertem ersten und zweiten Sekundärlicht mittels einer optischen Filtereinrichtung werden die Intensitäten des gefilterten ersten und zweiten Sekundärlichts erfasst. Die zur Filterung herangezogene Filtereinrichtung weist mindestens eine ansteigende und eine abfallende Filterflanke auf, wobei die Bragg-Wellenlänge des ersten Faser-Bragg-Gitters im Bereich der ansteigenden Filterflanke liegt, und wobei die Bragg-Wellenlänge des zweiten Faser-Bragg-Gitters im Bereich der abfallenden Filterflanke der optischen Filtereinrichtung liegt. Aus den erfassten Intensitäten nach einem Filtern, d.h. die Intensitäten des gefilterten ersten und zweiten Sekundärlichts ist die mechanische Größe bestimmbar. Die Intensitäten können mathematisch oder bei der Detektion aufsummiert werden, es kann ein Mittelwert berechnet werden, wobei gegebenenfalls eine Gewichtung vorgenommen werden kann. Aus einem Intensitätsvergleich bzw. einer Intensitätsauswertung, der Intensitäten des gefilterten ersten und zweiten Sekundärlichts kann eine Kompensationsgröße bestimmt werden, die zur Bestimmung der mechanischen Größe hinzugezogen werden kann.

Gemäß typischen Ausführungsformen kann eine Summenbildung der Intensitäten dadurch erzielt werden, dass eine spektrales Summensignal der mindestens zwei Sensoren durch eine abfallende und eine ansteigende Filterflanke gefiltert wird und das Signal einem Detektor der optischen Detektionseinrichtung zugeführt wird. Hierbei findet eine Summierung der Intensitäten durch Überlagerung der Intensitäten statt.

Eine Ausführungs form einer temperaturkompensierten faseroptischen Messvorrichtung zur Erfassung einer mechanischen Größe weist ein erstes und mindestens ein zweites Faser-Bragg-Gitter auf, welches jeweils eine von der aufgebrachten mechanischen Größe abhängige Bragg-Wellenlänge aufweist. Eine Primärlichtquelle dient der Bestrahlung der Faser-Bragg-Gitter mit Primärlicht. Eine optische Filtereinrichtung dient der Filterung von durch das Primärlicht hervorgerufenem und durch die Bragg-Wellenlänge modifiziertem, aus den ersten und zweiten Faser-Bragg-Gittern austretendem ersten und zweiten Sekundärlicht, wobei die optische Filtereinrichtung mindestens eine ansteigende und mindestens eine abfallende Filterflanke aufweist. Die Flanken können durch einen optischen Filter, der in Transmission und Reflektion verwendet wird, oder durch zwei optische Filter zur Verfügung gestellt werden.

Ferner ist die faseroptische Messvorrichtung derart ausgelegt, dass die Bragg-Wellenlänge des ersten Faser-Bragg-Gitters im Bereich der ansteigenden Filterflanke und die Bragg-Wellenlänge des zweiten Faser-Bragg-Gitters im Bereich der abfallenden Filterflanke der optischen Filtereinrichtung liegt. Eine optische Detektionseinrichtung zur Erfassung der Intensitäten des gefilterten ersten und zweiten Sekundärlichts ist ausgelegt zur Bereitstellung eines elektrischen Ausgangssignals für eine Auswerteeinheit, welche ausgelegt sein kann, die erfassten Intensitäten des gefilterten ersten und zweiten Sekundärlichts auszuwerten, und zum Bestimmen der mechanischen Größe aus den Intensitäten. Eine Auswertung kann durch Bilden der Summe, des Mittelwertes, der Summe mit Gewichtung der Intensitäten, des Mittelwertes mit Gewichtung der Intensitäten, oder auf eine andere geeignete Weise erfolgen.

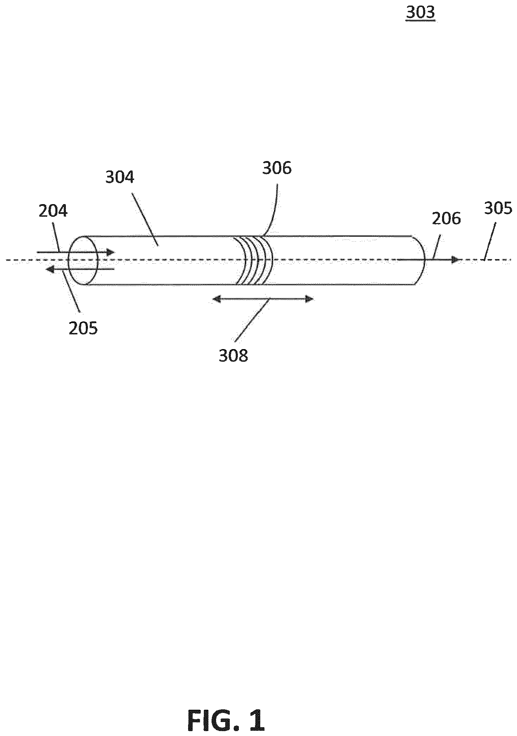

Fig. 1 veranschaulicht einen in einen Lichtwellenleiter integrierten Sensor bzw. eine Sensoreinheit 303, welche ein Faser-Bragg-Gitter 306 aufweist. Obwohl in Fig. 1 nur ein einziges Faser-Bragg-Gitter 306 gezeigt ist, ist zu verstehen, dass die vorliegende Erfindung nicht auf eine Datenerfassung aus einem einzelnen Faser-Bragg-Gitter 306 beschränkt ist, sondern dass längs einer Übertragungsfaser bzw. einer Sensorfaser 304 eine Vielzahl von Faser-Bragg-Gittern 306 angeordnet sein können.

Fig. 1 zeigt somit nur einen Abschnitt eines optischen Wellenleiters, welcher als Sensorfaser 304 ausgebildet ist, wobei diese Sensorfaser 304 empfindlich auf eine Faserdehnung 308 ist. Es sei hier darauf hingewiesen, dass der Ausdruck "optisch" bzw. "Licht" auf einen Wellenlängenbereich im elektromagnetischen Spektrum hinweisen soll, welcher sich vom ultravioletten Spektralbereich über den sichtbaren Spektralbereich bis hin zu dem infraroten Spektralbereich erstrecken kann. Eine Mittenwellenlänge des Faser-Bragg-Gitters 306, d.h. eine so genannte Bragg-Wellenlänge $\lambda_B$, wird durch die

folgende Gleichung erhalten:

$$\lambda_B = 2 \cdot n_k \cdot \Lambda.$$

Hierbei ist $n_k$ die effektive Brechzahl des Grundmodus des Kerns der Sensorfaser 304 und $\Lambda$ die räumliche Gitterperiode (Modulationsperiode) des Faser-Bragg-Gitters 306.

Eine spektrale Breite, die durch eine Halbwertsbreite der Reflexionsantwort gegeben ist, hängt von der Ausdehnung des Faser-Bragg-Gitters 306 längs der Sensorfaser 304 ab. Die Lichtausbreitung innerhalb der Sensorfaser 304 ist somit durch die Wirkung des Faser-Bragg-Gitters 306 beispielsweise abhängig von Kräften, Momenten und mechanischen Spannungen sowie Temperaturen, mit der die Sensorfaser 304 und insbesondere das Faser-Bragg-Gitter 306 innerhalb der Sensorfaser 304 beaufschlagt werden.

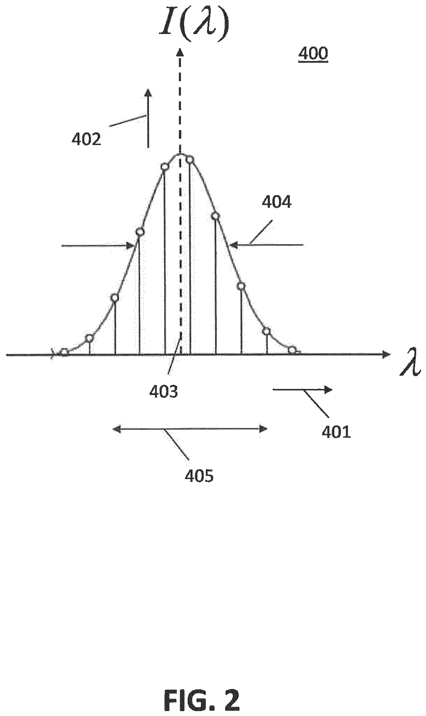

Wie in Fig. 1 gezeigt, tritt Messlicht 204 von links in die Sensorfaser 304 ein, wobei ein Teil des Messlichts 204 als ein transmittiertes Licht 206 mit einem im Vergleich zum Messlicht 204 veränderten Wellenlängenverlauf austritt. Ferner ist es möglich, reflektiertes Licht 205 am Eingangsende der Faser (d.h. an dem Ende, an welchem auch das Messlicht 204 eingestrahlt wird) zu empfangen, wobei das reflektierte Licht 204 ebenfalls eine modifizierte Wellenlängenverteilung, wie sie beispielsweise in Fig. 2 dargestellt ist (Sensorreflexionsantwort), aufweist.

In einem Fall, in dem das Messlicht 204 in einem breiten Spektralbereich eingestrahlt wird, ergibt sich in dem transmittierten Licht 206 an der Stelle der Bragg-Wellenlänge ein Transmissionsminimum (im Vergleich zu dem in Fig. 2 gezeigten Verlauf invertierter Verlauf, d.h. maximale Absorption bei der Bragg-Wellenlänge). In dem reflektierten Licht ergibt sich an dieser Stelle ein Reflexionsmaximum, welches unten stehend unter Bezugnahme auf Fig. 2 erläutert wird.

Fig. 2 stellt schematisch eine Sensorreflexionsantwort 400 dar, die empfangen wird, wenn breitbandiges Messlicht 204 eingestrahlt wird, und wenn die Mittenwellenlänge des Faser-Bragg-Gitters 306 (Fig. 1), d.h. die Bragg-Wellenlänge $\lambda_B$, der gestrichelten Linie 403 entspricht. Die Sensorreflexionsantwort 400 kann einen bezüglich der Mittenwellenlänge 403 symmetrischen Verlauf aufweisen, wobei der Verlauf eine Halbwertsbreite 404 (FWHM, Full Width at Half Maximum), d.h. eine spektrale Breite bei der Hälfte der Maximalintensität aufweist.

Schematisch sind in Fig. 2 hierbei räumliche Abtastpunkte (Kreise) gekennzeichnet. Durch die Auswertung des mit der Detektoreinheit 104 aufgenommenen modifizierten Sekundärlichts 203 ist es nunmehr möglich, den in Fig. 2 gezeigten Verlauf, d.h. die Sensorreflexionsantwort 400 als Funktion einer Wellenlänge $\lambda$ zu erhalten. In Fig. 2 ist somit eine Intensitätsverteilung $I(\lambda)$,

d.h. die von dem Sensorelement 303 reflektierte Intensität als Funktion der Wellenlänge λ dargestellt. Eine durch die Messvorrichtung zu erfassende Wellenlängenverteilung ergibt sich durch einen Wellenlängen-Ansprechbereich 405, der durch den Doppelpfeil in Fig. 2 dargestellt ist. Modifiziertes Sekundärlicht 203 weist in diesem Bereich Wellenlängenkomponenten auf, wenn das Faser-Bragg-Gitter 306 vermessen wird. Das modifizierte Sekundärlicht 203 entspricht dann der in Fig. 2 dargestellten Sensorreflexionsantwort 400, d.h., eine Reflexionsintensität 402 wird als Funktion der Wellenlänge 401 aufgenommen.

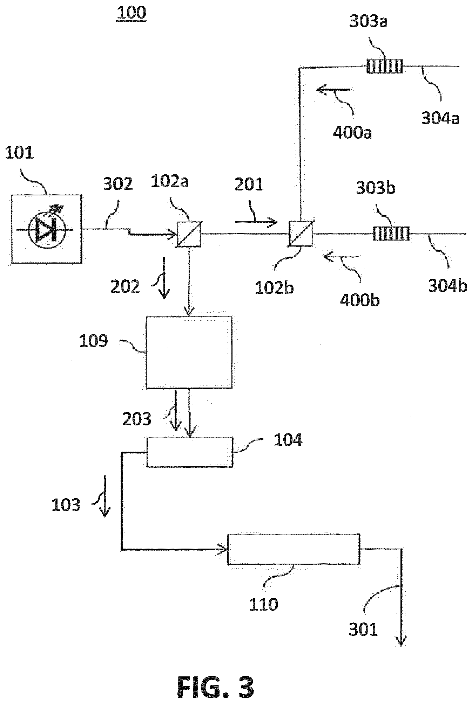

Fig. 3 zeigt ein schematisches Blockbild einer temperaturkompensierten faseroptischen Messvorrichtung gemäß einem Ausführungsbeispiel. Die in Fig. 3 gezeigte faseroptische Messvorrichtung ist ausgelegt zur Erfassung mindestens einer zu messenden Kraft. Die faseroptische Messvorrichtung 100 weist eine Primärlichtquelle 101 zur Bereitstellung von optischer Strahlung auf, mit welcher mindestens zwei optische Sensorelemente 303a, 303b bestrahlt werden können.

Zu diesem Zweck ist eine optische Übertragungsfaser 302 zwischen der Primärlichtquelle 101 und einem ersten Faserkoppler 102a bereitgestellt. Aus dem Faserkoppler 102a tritt Primärlicht 201 aus, welches auf einen zweiten Faserkoppler 102b gerichtet wird, welcher das Primärlicht 201 auf eine erste Sensorfaser 304a, welche das erste Sensorelement 303a enthält, und eine zweite Sensorfaser 304b gerichtet wird, welche das zweite optische Sensorelement 303b enthält. Die von den optischen Sensorelementen 303a, 303b in Abhängigkeit von einer aufgebrachten Kraft zurückgegebenen Sensorreflexionsantworten 400a, 400b werden wiederum zu dem zweiten Faserkoppler 102b zurückgeführt und an den ersten Faserkoppler 102a weitergeleitet. In dem ersten Faserkoppler 102a wird ein Teil des zurückgeführten Lichts als Sekundärlicht 202 einer Filtereinrichtung 109 zugeführt. D.h., der Filtereinrichtung 109 werden durch das Sekundärlicht 202 Sensorreflexionsantworten 400a und 400b, die unterschiedliche Zentralwellenlängen aufweisen können, als optische Eingangssignale bereitgestellt.

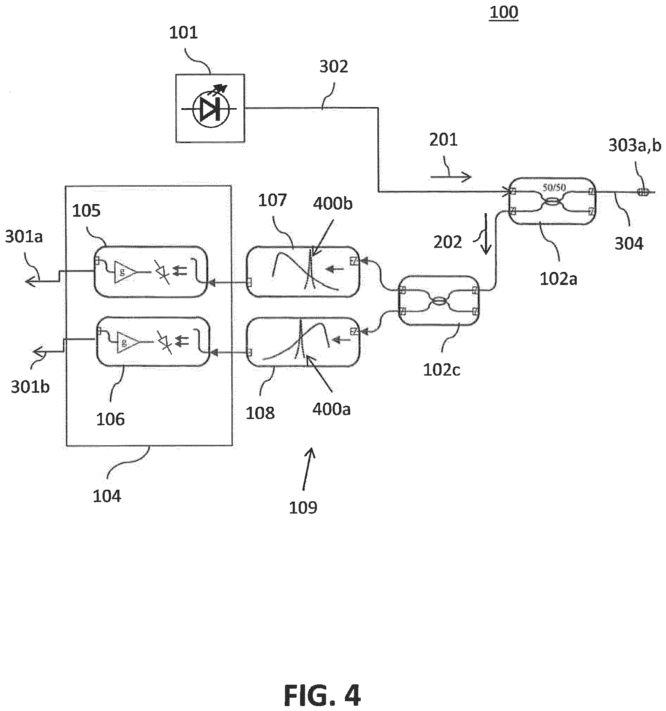

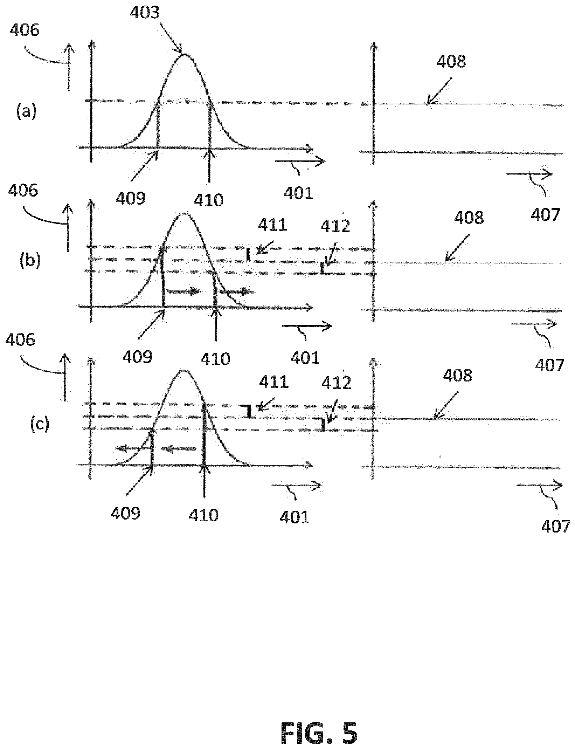

In der Filtereinrichtung 109 erfolgt eine Filterung der Eingangssignal-Wellenlängen, wie unten stehend unter Bezugnahme auf Fig. 4 näher erläutert werden wird. Gefiltertes Sekundärlicht 203 wird schließlich aus der Filtereinrichtung 109 ausgegeben und einer Detektionseinrichtung 104 zugeführt, die den ersten und zweiten Sensorreflexionsantworten 400a, 400b zugeordnete Detektoren aufweisen kann (siehe unten, Beschreibung unter Bezugnahme auf Fig. 4). Gegebenenfalls kann auch ein Detektor die Summe der Intensitäten der Reflexionsantworten detektieren. Hierbei können die Signale der zumindest zwei Sensoren überlagert werden. Das elektrische Ausgangssignal 103 wird schließlich einer Auswerteeinheit 110 zugeleitet, die betriebsmäßig mit der Detektionseinrichtung 104 verbunden ist. In der Auswerteeinheit 110 wird einer Berechnung basierend auf den beiden, auf den beiden Sensorreflexionsantworten 400a, 400b basierenden Signalen durchgeführt, derart, dass eine wie unten stehend unter Bezugnahme auf Fig. 5 zu erläuternde Temperaturkompensation erfolgt. Ein temperaturkompensiertes Ausgangssignal 301 wird schließlich durch die Auswerteeinheit 110 nach einer Auswertung der elektrischen Ausgangssignale 103 der Detektionseinrichtung 104 bereitgestellt. Typischerweise kann auch eine andere Kompensation, z.B. eine Kompensation von Momenten oder anderen Einflüssen vorgenommen werden, wobei durch die Anordnung eine Gleichtaktunterdrückung stattfindet, d.h. Einflüsse, die beide Faser-Bragg-Gitter gleich beeinflusst werden in einem ausgewerteten Signale durch die Filterung gemäß den hier beschriebenen Ausführungsformen unterdrückt.

Es sei hier darauf hingewiesen, dass, obwohl in Fig. 3 die Ansteuerung von zwei optischen Sensorelementen 303a, 303b dargestellt ist, drei oder mehr optische Sensorelemente angesprochen werden können, um beispielsweise die Messgenauigkeit zu erhöhen. Das Primärlicht kann vor einem Bestrahlen der optischen Sensorelemente 303a, 303b durch die Primärlichtquelle 101 intensitätsmoduliert werden, um beispielsweise mittels einer Lock-In-Technik unerwünschte Störungen zu eliminieren oder zumindest zu verringern. Bei einer Intensitätsmodulation des Primärlichts 201 durch die Primärlichtquelle 101 kann die Modulationsfrequenz der Detektionseinrichtung 104 zur Verfügung gestellt werden, um eine synchronisierte Detektion in der Detektionseinrichtung 104 zu ermöglichen.

Wie in Fig. 3 gezeigt, dient der zweite Faserkoppler 102b zur Aufteilung des Primärlichts 201 auf die beiden Sensorfasern 304a, 304b, welche jeweils die optischen Sensorelemente 303a, 303b enthalten. Das rückreflektierte Licht, d.h. die Sensorreflexionsantworten 400a bzw. 400b, werden dann ebenfalls über den zweiten Faserkoppler 102b rückgekoppelt. Die in Fig. 3 schematisch gezeigte Filtereinrichtung 109 ist als eine optische Filtereinrichtung ausgebildet, die ein optisches Filter umfasst. Das optische Filter kann gewählt sein aus der Gruppe, welche besteht aus einem Dünnschichtfilter, einem Faser-Bragg-Gitter, einem LPG (Long-Period-Grating), einem Arrayed-Waveguide-Grating (AWG), einem Echelle-Gitter, einer Gitteranordnung, einem Prisma, einem Interferometer und jedweder Kombination davon.

Ferner sei hier darauf hingewiesen, dass, obwohl eine Messung in Reflexion in Fig. 3 veranschaulicht ist, die als Faser-Bragg-Gitter ausgebildeten optischen Sensorelemente 303a, 303b auch in Transmission betrieben werden können, derart, dass transmittiertes Primärlicht 201 als ein Sekundärlicht (transmittiertes Sekundärlicht) 202 der optischen Filtereinrichtung 109 zugeführt wird.

Fig. 4 zeigt ein detaillierteres Blockbild der temperaturkompensierten faseroptischen Messvorrichtung gemäß einem weiteren Ausführungsbeispiel. Es sei hier darauf hingewiesen, dass Komponenten, die bereits unter Bezugnahme auf Fig. 3 beschrieben worden sind, hier nicht erneut erwähnt sind, um eine redundante Beschreibung zu vermeiden. Die Primärlichtquelle 101 ist über eine Übertragungsfaser 302 mit dem Strahlteiler 102a gekoppelt, derart, dass das aus der Primärlichtquelle 101 austretende Primärlicht 201 einem optischen Sensorelement 303 zugeführt werden kann. Das optische Sensorelement ist in eine Sensorfaser 304 integriert. Obwohl hier nur ein optisches Sensorelement 303 gezeigt ist, ist zu verstehen, dass die in Fig. 4 gezeigte Auswerteanordnung für mindestens zwei optische Sensorelemente ausgelegt ist, derart, dass zwei Faser-Bragg-Gitter-Signale an unterschiedlichen Filterflanken einer optischen Filtereinrichtung 109 detektiert werden können.

Das von den optischen Sensorelementen 303 (nur als ein optisches Sensorelement 303 in Fig. 4 dargestellt) zurückgeworfene Licht wird wiederum über den Faserkoppler 102a geleitet auf einen Faserkoppler 102c, welcher das Licht separaten Detektoren, d.h. einem ersten Detektor 105 und einem zweiten Detektor 106 über separate Filterflanken 107, 108 zuführen kann. Schematisch sind in Fig. 4 zwei Filterflanken gezeigt, d.h. eine abfallende Filterflanke 107 und eine ansteigende Filterflanke 108, welche durch ein oder mehrere optische Filter, die in der Filtereinrichtung 109 angeordnet sind, bereitgestellt werden. Zum Beispiel können die Filterflanken durch einen Filter, der einerseits in Transmission und andererseits in Reflektion filtert, zur Verfügung gestellt werden. Die optische Filtereinrichtung 109 gemäß einem Ausführungsbeispiel, das mit anderen hierin beschriebenen Ausführungsbeispielen kombiniert werden kann, kann als eine Kantenfiltereinrichtung ausgeführt sein. Die beiden separaten Detektoren 105, 106 erlauben es nun, separate elektrische Ausgangssignale 103a, 103b einer in Fig. 4 nicht gezeigten Auswerteeinheit 110 (Fig. 3) zuzuführen, in welcher die beiden elektrischen Ausgangssignale 103a, 103b miteinander verglichen werden können.

Der Faserkoppler 102c kann derart ausgelegt sein, dass das zugeführte Sekundärlicht 202 zu gleichen Anteilen auf die abfallende Filterflanke 107 und die ansteigende Filterflanke 108 aufgeteilt wird. Gemäß anderen Ausführungsformen kann anstelle einer Faserkopplung auch eine andere Anordnung verwendet werden. Zum Beispiel kann ein Strahlteiler in Verbindung mit einem Filterelement verwendet werden, wobei eine Filterflanke in Transmission des einen Filterelements und eine Filterflanke in Reflektion des einen Filterelements zur Verfügung gestellt wird. Die angeschlossenen Detektoren, d.h. der erste Detektor 105, der das Signal an der abfallenden Filterflanke 107 misst, und der zweite Detektor 106, der das Signal an der ansteigenden Filterflanke 108 misst, geben entsprechende elektrische Ausgangssignale 103a, 103b aus, welche den Intensitäten derjenigen Anteile des Sekundärlichts 202 entsprechen, die entsprechend der optischen Filterung in der optischen Filtereinrichtung 109 am Ausgang der Filtereinrichtung 109 zur Verfügung stehen.

Durch die in Fig. 4 gezeigte optische und elektrische Anordnung wird ein differentielles Messsystem auf Basis von Faser-Bragg-Gitter-Sensoren bereitgestellt. Wenn mindestens zwei Faser-Bragg-Gitter-Sensoren durch ein gleiches Maß mit einer Größe A beeinflusst werden und durch ein unterschiedliches Maß mit einer Größe B beeinflusst werden, ermöglicht die differentielle Auswertung der Faser-Bragg-Gitter-Signale, d.h. der Sensorreflexionsantworten 400a, 400b, in dem faseroptischen Messsystem durch Auswertung der spektralen Reflexionssignale beider Sensoren ein Maß für die Größe B zu erhalten, wobei der Einfluss der Größe A auf beide Sensoren kompensiert oder zumindest teilweise kompensiert wird.

Insbesondere geeignet ist das differentielle Messverfahren für Kantenfilter-basierte faseroptische Messsysteme. Mit anderen Worten werden in der gezeigten faseroptischen Messvorrichtung Vorteile erzielt gegenüber einer Messvorrichtung, welche Reflexionssignale zweier Faser-Bragg-Gitter-Sensoren mittels eines spektralauflösenden Verfahrens erfasst. Die Mittenfrequenzen der Faser-Bragg-Gitter-Sensoren sind spektral ausreichend weit voneinander separiert. Beide Sensoren sind beispielsweise der gleichen Temperatur ausgesetzt, wobei ein Sensor dabei jedoch von jeglichen anderen Einflüssen mechanisch entkoppelt ist.

Das in Fig. 4 dargestellte faseroptische Messsystem stellt eine Kompensation, z.B. eine Temperaturkompensation bereit, die auf einer Kantenfilter-basierten Auswertung beruht. Aus den beiden so genannten gemessenen Lichtintensitäten kann mittels linearisierter Kennlinie oder polynomialer Auswertung einer beliebigen Kennlinie auf die Wellenlänge des vom Sensor reflektierten Lichts geschlossen werden. Das elektrische Ausgangssignal der Photodetektoren kann vor der Signalabtastung elektrisch tiefpassgefiltert werden. Dies ermöglicht die Implementierung eines Anti-Aliasing-Filters. In der in Fig. 4 gezeigten optischen Filtereinrichtung 109 wird ein spektrales Filter verwendet, das bezüglich einer Zentrumswellenlänge eine symmetrische, (quasi-lineare) Filtercharakteristik aufweist. Eine derartige Filtercharakteristik kann durch eine Vielzahl von Filteranordnungen realisiert werden. Die optischen Sensorelemente 303a, 303b werden als Hintereinanderschaltung zweier Faser-Bragg-Gitter-Sensoren in einer optischen Sensorfaser 304 realisiert.

Gemäß weiteren Ausführungsformen kann das erste Sensorelement 303a und das zweite Sensorelement 303b, zum Beispiel jeweils ein Faser-Bragg-Gitter, in einer optischen Faser hintereinander angebracht werden. Die Summe der beiden Reflektionsantworten kann in der einen Faser durch eine Filteranordnung mit zumindest einem Filter, wobei die Filteranordnung einen ansteigende und eine abfallende Flanke hat, gefiltert werden und nach der Filterung durch einen Detektor detektiert werden. Hierbei wird eine Auswertung durch eine Überlagerung der beiden Intensitäten der beiden Reflektionsantworten (oder Transmissionsantworten), d.h. einer Summenbildung, zur Verfügung gestellt. Eine Dehnung, die auf die gesamte Faser eingebracht wird und die auf die beiden Sensorelemente gleichermaßen wirkt, führt zu einer Verschiebung der Peaks der Faser-Bragg-Gitter, wobei die Überlagerung jedoch im wesentlichen konstant bleibt. Es findet somit, wie auch bei anderen Ausführungsformen, eine Gleichtaktunterdrückung statt. Auch bei einer gleichen Erwärmung am Ort der Sensorelemente findet eine analoge Kompensation statt, wobei die Überlagerung der beiden Intensitäten der Reflektionsantworten (oder Transmissionsantworten) im wesentlichen konstant bleibt.

Gemäß typischen Ausführungsformen sind die ansteigende Flanke der Filterung und die abfallende Flanke der Filterung symmetrisch angeordnet. Ferner können die Signalpeaks der Reflektionsantworten hierzu spektral symmetrisch angeordnet sein. Somit folgt aus einer synchronen spektralen Verschiebung der Reflektionsantworten ein im wesentlichen gleichbleibendes Summensignal. Einflüsse, Momente, und Schwankungen in der Umgebung, die auf beide Sensorelemente gleich wirken können somit automatische, d.h. passiv kompensiert werden. Eine Änderung des ausgewerteten Messsignals findet durch eine Verschiebung.

Eine Ausführungsform mit beiden Sensorelementen in einer Faser, deren Ausgangssignal, d.h. die Reflektionssignale oder Transmissionssignale, auf eine Filteranordnung und anschließend auf einen Detektor geleitet werden stellen eine besonders einfache Anordnung und somit kostengünstige Anordnung dar. Hierbei wird Auswertung durch eine Überlagerung, d.h. Summenbildung, der Intensitäten auf dem Detektor erzielt. Ferner nehmen optische Abbildungsfehler durch die Verwendung einer Faser, auf beide Signale gleichermaßen Einfluss. Andere Ausführungsformen, bei denen die Signale zweier Sensorelemente in einer Faser getrennt gefiltert und detektiert werden, oder bei denen die Signale zweier Sensorelement in je einer Faser getrennt gefiltert und detektiert werden, sind im Aufbau komplexer, können durch eine numerische Auswertung gegebenenfalls eine höhere Flexibilität zur Verfügung stellen.

Fig. 5 ist ein Graph zur Veranschaulichung einer Filterfunktion, die durch die optische Filtereinrichtung 109 bereitgestellt wird. Die Mittenwellenlängen der optischen Sensorelemente 303a, 303b, die als Faser-Bragg-Gitter ausgelegt sind, sind derart eingestellt, dass diese im unbelasteten Zustand Reflexionsmaxima symmetrisch um eine Mittenwellenlänge des optischen Filters aufweisen. Die optischen Sensorelemente 303a, 303b werden ferner derart angeordnet, dass sie gleichermaßen durch eine Größe A beeinflusst werden, jedoch nicht gleichermaßen durch eine Größe B.

Beispielsweise werden beide optische Sensorelemente 303a, 303b gleichermaßen einer Temperatur T (Größe A) ausgesetzt. Eine Änderung der Temperatur T bewirkt eine gleichmäßige Verschiebung der beiden Mittenwellenlängen (Faser-Bragg-Gitter-Reflexionsmaxima) im Spektrum. Aufgrund der symmetrischen, quasi-linearen Filterkanten des Filters reduziert sich die am Detektor auftretende Lichtleistung eines optischen Sensorelements 303a, während die Lichtleistung, die von dem anderen optischen Sensorelement 303b zurückgeworfen wird, sich entsprechend erhöht. Daher bewirkt eine Änderung der Temperatur beider Faser-Bragg-Gitter-Sensoren durch die gleichförmige spektrale Verschiebung, wie sie in Fig. 5, Graph (b) und Graph (c) gezeigt ist, keine Änderung im gemessenen Summen-Ausgangssignal. Das filterbasierte Messverfahren gemäß dem vorliegenden Ausführungsbeispiel erfasst Wellenlängenänderungen als Änderungen in der gemessenen Lichtintensität, so dass bei einer gleichförmigen Beeinflussung durch die Größe A keine Ausgangssignaländerung auftritt.

Das Messverfahren gemäß dem beschriebenen Ausführungsbeispiel kompensiert jedoch nicht nur gleichförmige Wellenlängenänderungen in den Faser-Bragg-Gitter-Sensoren, sondern auch Änderungen der Zentralwellenlänge des spektralen Filters. Eine Ursache für eine Verschiebung der Zentrumswellenlänge des optischen Filters kann durch Temperaturänderungen im Messsystem selbst hervorgerufen werden. Je nach technischer Ausführung des Filters können hierbei Driften im Bereich mehrerer zehn pm/K auftreten. Durch die symmetrische Anordnung der Faser-Bragg-Gitter-Sensoren und die symmetrische Form des Filters ist es, wie oben beschrieben, möglich, das gemessene Intensitätssignal unabhängig von der in einem definierten Bereich beliebigen Verschiebung der Filtercharakteristika zu erhalten.

Änderungen der Größe B, die sich nicht gleichmäßig auf beide Sensoren auswirken (gegeben durch den Gesamtaufbau der faseroptischen Messvorrichtung), bewirken somit eine effektive Intensitätsänderung am Detektor, wodurch in einer Datenverarbeitung des Messsystems eine Wellenlängenänderung detektierbar ist. Gemäß einem bevorzugten Ausführungsbeispiel, welches mit anderen hierin beschriebenen Ausführungsbeispielen kombiniert werden kann, ist die Anordnung des Messsystems derart, dass ein zweites optisches Sensorelement 303b (FBG2) durch die Umgebungstemperatur und gleichzeitig durch die vorherrschende Dehnung am Sensorort beeinflusst wird, während ein erstes optisches Sensorelement 303a (FBG1) mechanisch entkoppelt ist und somit nur durch die Umgebungstemperatur, nicht aber durch die Materialdehnung am Sensor beeinflusst wird. Auf diese Weise kann das faseroptische Messsystem beispielsweise kompensiert werden im Hinblick auf:

(i) Verschiebungen der Zentrumswellenlänge des Filters des Messsystems, beispielsweise durch thermische Einflüsse; und

(ii) gleichförmige Wellenlängenänderungen der beiden optischen Sensorelemente (FBG-Sensoren), beispielsweise bedingt durch gleiche Temperaturänderungen am Ort beider Sensoren.

Wie in Fig. 5 gezeigt, weist eine Filtertransmission 406 eines mit einer Halbwertsbreite 404 versehenen optischen Filters eine bestimmte Symmetrie auf, derart, dass ansteigende und abfallende Filterflanken vorhanden sind. In Fig. 5 sind für drei unterschiedliche Fälle (a), (b) und (c) entsprechende Filtertransmissionen 406 als Funktion einer Wellenlänge 401 aufgetragen. Der Begriff "Zentrumswellenlänge", wie er oben stehend verwendet wurde, bezeichnet das Maximum der Filtertransmissionskurven. Die Zentrumswellenlänge oder Mittenwellenlänge 403 entspricht damit derjenigen Wellenlänge am Ort der maximalen Filtertransmission. Mittenwellenlängen der als Faser-Bragg-Gitter-Sensoren ausgebildeten optischen Sensorelemente 303a, 303b sind nun derart eingestellt, dass eine erste Bragg-Wellenlänge 409 im Bereich der ansteigenden Filterflanke liegt, und dass ferner eine zweite Bragg-Wellenlänge 410 im Bereich der abfallenden Filterflanke liegt.

Eine Signalamplitude 408 als Funktion einer Messzeit 407 ist entsprechend der in Fig. 5(a) gezeigten gestrichelten Linie angegeben. Die beiden optischen Signale tragen nun, wenn sie aufaddiert werden, gleichermaßen zu der Signalamplitude 408 bei. Wenn nun eine gleichförmige Verschiebung der beiden Bragg-Wellenlängen, d.h. der ersten Bragg-Wellenlänge 409 und der zweiten Bragg-Wellenlänge 410 auftritt, beispielsweise durch ein gleichmäßiges Beaufschlagen der beiden optischen Sensorelemente 303a, 303b durch eine Größe A, so können sich, wie in Fig. 5(b) gezeigt, beide Bragg-Wellenlängen erhöhen. Auf diese Weise wird in dem ersten Detektor 105, welcher der ersten Bragg-Wellenlänge 409 zugeordnet ist, eine um eine erste Transmissionsdifferenz 411 erhöhte Signalamplitude erfasst, während in dem zweiten Detektor 106, welcher der zweiten Bragg-Wellenlänge 410 zugeordnet ist, eine um eine zweite Transmissionsdifferenz 412 erniedrigte Signalamplitude detektiert wird.

Für symmetrische Filterflanken, insbesondere für nahezu linear ansteigende bzw. abfallende Filterflanken der optischen Filtereinrichtung 109, entspricht die erste Transmissionsdifferenz 411 der zweiten Transmissionsdifferenz 412. Mit anderen Worten, die gesamte detektierte Signalamplitude beider Detektoren 105, 106 ist unverändert geblieben, wenn beide Faser-Bragg-Gitter-Sensoren mit der gleichen Größe A derart beaufschlagt werden, dass eine Wellenlängenverschiebung zu höheren Wellenlängen, wie in Fig. 5(b) gezeigt, oder eine Verschiebung beider Bragg-Wellenlängen beider optischer Sensorelemente 303a, 303b zu niedrigeren Wellenlängen erfolgt, wie dies in Fig. 5(c) veranschaulicht ist.

Ein Auswertung der erfassten Intensitäten des gefilterten ersten und zweiten Sekundärlichts kann gemäß einem Ausführungsbeispiel, das mit anderen hierin beschriebenen Ausführungsbeispielen kombiniert werden kann, eine Summen- und/oder Differenzbildung der Intensität des ersten Sekundärlichts und der Intensität des zweiten Sekundärlichts umfassen, eine resultierende Signalamplitude 108 zu erhalten.

Gemäß einem weiteren Ausführungsbeispiel weist die optische Filtereinrichtung 109 ein optisches Filter mit symmetrischen Filterflanken auf. Hierbei sind die optischen Sensorelemente 303a, 303b, welche als Faser-Bragg-Gitter-Sensoren ausgelegt sein können, derart konfiguriert, dass die erste Bragg-Wellenlänge 409 im Bereich der ansteigenden Filterflanke liegt, während die zweite Bragg-Wellenlänge 410 im Bereich der abfallenden Filterflanke liegt. Wenn die optische Filtereinrichtung symmetrische ansteigende und abfallende Filterflanken aufweist, ergibt sich damit eine gute Kompensation von Größen, die sich gleichermaßen auf beide optische Sensorelemente 303a, 303b auswirken, wie beispielsweise eine Veränderung der Temperatur. Die Filtercharakteristik der Filtereinrichtung 109 kann eine oder mehrere der folgenden Eigenschaften aufweisen:

(i) quasilineare Filtercharakteristik;
(ii) dreieckförmige Filterflanken; und
(iii) symmetrische Filterflanken

Bei symmetrischen Filterflanken ist es möglich, dass das von der mechanischen Größe modifizierte erste und zweite Sekundärlicht 202 an symmetrischen ansteigenden und abfallenden Filterflanken optisch symmetrisch gefiltert wird. Gemäß einer Ausführungsform kann ein spektrales Summensignal der zumindest zwei Sensoren (zum Beispiel 2, 4 oder 2*n Sensoren, wobei n eine natürlicher Zahl ist) zwei Filterflanken zugeführt werde, die durch einen Filter in Transmission und Reflektion oder durch zwei Filter zur Verfügung gestellt werden. Eine optische Filtereinrichtung 109 kann auch zwei separate, den Faser-Bragg-Gittern zugeordnete und in den separaten Sensorfasern 304a, 304b angeordnete optische Filtereinheiten mit Filterflanken 107, 108 unterschiedlicher Steigung aufweisen. Daraus ergibt sich der Vorteil, dass bei einer gleichförmigen Beaufschlagung beider optischer Sensorelemente 303a, 303b eine verbesserte Kompensation im Hinblick auf Störgrößen ermöglicht wird, welche sich auf die Bragg-Wellenlängen 409 bzw.410 beider optischer Sensorelemente 303a, 303b gleichermaßen auswirken.

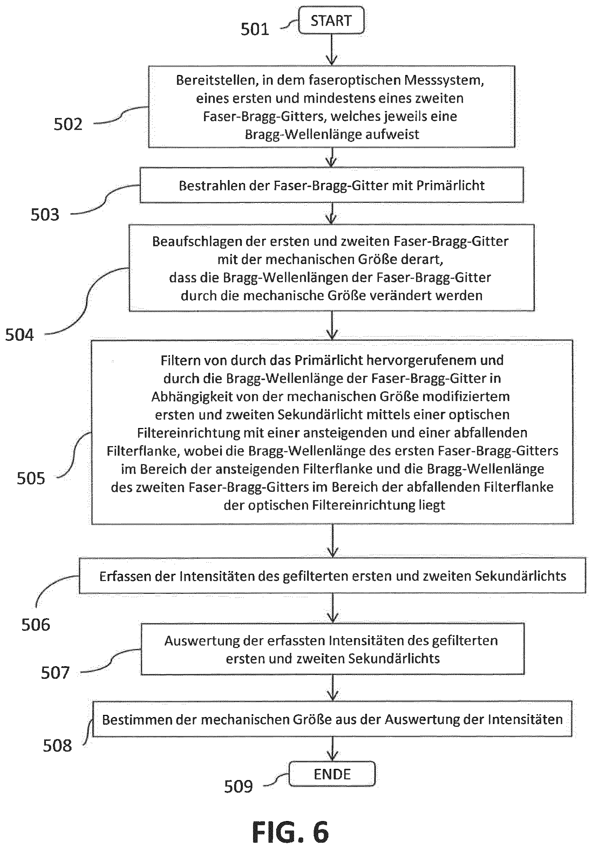

Fig. 6 ist ein Flussdiagramm, welches ein Verfahren zur Temperaturkompensation eines zur Erfassung einer mechanischen Größe ausgelegten faseroptischen Messsystems veranschaulicht. Nach einem Start in einem Block 501 wird in einem nachfolgenden Block ein erstes und mindestens ein zweites Faser-Bragg-Gitter 306 als erstes und zweites optisches Sensorelement 303a, 303b in dem faseroptischen Messsystem bereitgestellt. Die Faser-Bragg-Gitter 306 weisen jeweils unterschiedliche Bragg-Wellenlängen 409, 410 auf. Anschließend werden die Faser-Bragg-Gitter mit Primärlicht 201 bestrahlt (Block 503). Wenn nun die ersten und zweiten Faser-Bragg-Gitter mit der mechanischen Größe beaufschlagt werden (Block 504), ergibt sich eine Veränderung der Bragg-Wellenlängen 409, 410 der Faser-Bragg-Gitter 306 entsprechend der mechanischen Größe.

In dem Block 505 wird das durch das Primärlicht hervorgerufene und durch die Bragg-Wellenlänge 409, 410 der Faser-Bragg-Gitter in Abhängigkeit von der mechanischen Größe modifizierte erste und zweite Sekundärlicht 202 mittels der optischen Filtereinrichtung 109 gefiltert. Die optische Filtereinrichtung 109 weist eine ansteigende und eine abfallende Filterflanke 108 bzw. 107 auf. Die Bragg-Wellenlänge 409 des ersten Faser-Bragg-Gitters 303a liegt im Bereich der ansteigenden Filterflanke 108, während die Bragg-Wellenlänge 410 des zweiten Faser-Bragg-Gitters 303b im Bereich der abfallenden Filterflanke 107 der optischen Filtereinrichtung 109 liegt. Schließlich werden in einem Block 506 die Intensitäten des gefilterten ersten und zweiten Sekundärlichts 202 erfasst. Ein Auswertung, zum Beispiel einen Summenbildung, der erfassten Intensitäten des gefilterten ersten und zweiten Sekundärlichts 202 wird durchgeführt (Block 507), woraufhin aus den Intensitäten (Block 508) die mechanische Größe bestimmbar wird. Die Prozedur wird in einem Block 509 beendet.

Durch die Störgrößenkompensation für ein faseroptisches Messsystem lassen sich beispielsweise verbesserte Beschleunigungssensoren mit reduzierter Empfindlichkeit für Querbeschleunigung bereitstellen. Ein weiteres Anwendungsbeispiel ist ein temperaturkompensierter Dehnungssensor sowie ein Dehnungssensor mit kompensierter Empfindlichkeit für Scherdehnungen. Hierbei können Effekte wie zum Beispiel Temperatureffekte am Sensor oder andere Effekte am Sensor kompensiert werden.

**Patentansprüche**

1. Verfahren zur Kompensation eines zur Erfassung einer mechanischen Größe ausgelegten faseroptischen Messsystems, umfassend:

   Bereitstellen, in dem faseroptischen Messsystem, eines ersten und mindestens eines zweiten Faser-Bragg-Gitters, welches jeweils eine Bragg-Wellenlänge aufweist;
   Bestrahlen der Faser-Bragg-Gitter mit Primärlicht;
   Beaufschlagen der ersten und zweiten Faser-Bragg-Gitter mit der mechanischen Größe derart, dass die Bragg-Wellenlängen der Faser-Bragg-Gitter durch die mechanische Größe verändert werden, wobei das erste und mindestens zweite Faser-Bragg-Gitter im Wesentlichen in gleichem Maß von einer Größe (A) beeinflusst werden und in einem unterschiedlichen Maß von der mechanischen Größe (B) beeinflusst werden;
   Filtern von durch das Primärlicht hervorgerufenem und durch die Bragg-Wellenlänge der Faser-Bragg-Gitter in Abhängigkeit von der mechanischen Größe modifiziertem ersten und zweiten Sekundärlicht mittels einer optischen Filtereinrichtung mit einer ansteigenden und einer abfallenden Filterflanke, wobei
   die Bragg-Wellenlänge des ersten Faser-Bragg-Gitters im Bereich der ansteigenden Filterflanke und die Bragg-Wellenlänge des zweiten Faser-Bragg-Gitters im Bereich der abfallenden Filterflanke der optischen Filtereinrichtung liegt;
   Erfassen der Intensitäten des gefilterten ersten und zweiten Sekundärlichts;
   Auswerten der erfassten Intensitäten des gefilterten ersten und zweiten Sekundärlichts, wobei das Auswerten der erfassten Intensitäten des gefilterten ersten und zweiten Sekundärlichts eine Summenbildung der Intensität des erste Sekundärlichts und der Intensität des zweiten Sekundärlichts umfasst; und
   Bestimmen der mechanischen Größe aus der Intensitätsauswertung.

2. Verfahren nach Anspruch 1, wobei das von der mechanischen Größe modifizierte erste und zweite Sekundärlicht an symmetrischen ansteigenden und abfallenden Filterflanken optisch gefiltert wird.

3. Verfahren nach einem der Ansprüche 1 oder 2, wobei die erfassten Intensitäten mathematisch oder bei der Detektion aufsummiert werden, insbesondere wobei ein Mittelwert berechnet wird, weiterhin insbesondere wobei gegebenenfalls eine Gewichtung des Mittelwerts vorgenommen wird.

4. Verfahren nach mindestens einem der voranstehenden Ansprüche, wobei das Primärlicht vor dem Bestrahlen der Faser-Bragg-Gitter intensitätsmoduliert wird.

5. Verfahren nach mindestens einem der voranstehenden Ansprüche, wobei ein spektrales Summensignal des ersten Faser-Bragg-Gitters und des mindestens zweiten Faser-Bragg-Gitters verwendet wird.

6. Faseroptische Messvorrichtung zur kompensierten Erfassung einer mechanischen Größe, umfassend:

   ein erstes und mindestens ein zweites Faser-Bragg-Gitter, welches jeweils eine von der aufgebrachten mechanischen Größe abhängige Bragg-Wellenlänge aufweist, wobei das erste und mindestens zweite Faser-Bragg-Gitter angeordnet ist, um im Wesentlichen in gleichem Maß von einer Größe (A) beeinflusst zu werden und in einem unterschiedlichen Maß von der mechanischen Größe beeinflusst zu werden;

eine Primärlichtquelle zur Bestrahlung der Faser-Bragg-Gitter mit Primärlicht;

eine optische Filtereinrichtung zur Filterung von durch das Primärlicht hervorgerufenem und durch die Bragg-Wellenlängen modifiziertem, aus den ersten und zweiten Faser-Bragg-Gittern austretenden ersten und zweiten Sekundärlicht, wobei

die optische Filtereinrichtung mindestens eine ansteigende und mindestens eine abfallende Filterflanke aufweist, und wobei

die Bragg-Wellenlänge des ersten Faser-Bragg-Gitters im Bereich der ansteigenden Filterflanke und die Bragg-Wellenlänge des zweiten Faser-Bragg-Gitters im Bereich der abfallenden Filterflanke der optischen Filtereinrichtung liegt; und

eine optische Detektionseinrichtung zur Erfassung der Intensitäten des gefilterten ersten und zweiten Sekundärlichts; und

eine Auswerteeinheit zum Auswerten der erfassten Intensitäten des gefilterten ersten und zweiten Sekundärlichts und zum Bestimmen der mechanischen Größe aus der Intensitätsauswertung, wobei die Auswerteeinheit und/oder die optische Detektionseinheit für eine Summenbildung der Intensität des erste Sekundärlichts und der Intensität des zweiten Sekundärlichts angepasst ist.

7. Faseroptische Messvorrichtung nach Anspruch 6, wobei die optische Filtereinrichtung symmetrische ansteigende und abfallende Filterflanken aufweist.

8. Faseroptische Messvorrichtung nach Anspruch 6 oder 7, ferner umfassend mindestens einen Anordnung, die angepasst ist zur Aufteilung des aus den ersten und zweiten Faser-Bragg-Gittern austretenden ersten und zweiten Sekundärlichts auf zwei separate optische Achsen oder Faserstränge.

9. Faseroptische Messvorrichtung nach Anspruch 8, wobei die optische Filtereinrichtung zwei separate, den Bragg-Gittern zugeordnete und in den separaten Fasersträngen angeordnete optische Filtereinheiten mit Filterflanken unterschiedlicher Steigung aufweist.

10. Faseroptische Messvorrichtung nach mindestens einem der Ansprüche 6 bis 9, wobei die optische Filtereinrichtung ein optisches Filter umfasst, das gewählt ist aus der Gruppe, welche besteht aus einem Dünnschichtfilter, einem Faser-Bragg-Gitter, einem LPG, einem Arrayed-Waveguide-Grating (AWG), einem Echelle-Gitter, einer Gitteranordnung, einem Prisma, einem Interferometer, und jedweder Kombination davon.

11. Faseroptische Messvorrichtung nach mindestens einem der Ansprüche 8 bis 10, wobei die optische Detektionseinrichtung zur Erfassung der Intensitäten des gefilterten ersten und zweiten Sekundärlichts separate, den Fasersträngen zugeordnete optische Detektoren für das erste und zweite gefilterte Sekundärlicht aufweist.

12. Faseroptische Messvorrichtung nach mindestens einem der Ansprüche 6 bis 11, wobei ein spektrales Summensignal des ersten Faser-Bragg-Gitters und des mindestens zweiten Faser-Bragg-Gitters verwendet wird.

## Claims

1. Method for compensating a fiber optic measurement system designed to determine a mechanical quantity, comprising:

providing, in the fiber optic measuring system, a first and at least a second fiber Bragg grating, which have a respective Bragg wavelength;
irradiating the fiber Bragg grating with primary light;
applying, to the first and second fiber Bragg grating, the mechanical quantity in such a way that the Bragg wavelengths of the fiber Bragg gratings are changed by the mechanical quantity, wherein the first and at least second fiber Bragg grating are affected essentially by an equal measure with a quantity (A) and affected by an unequal measure with the mechanical quantity (B);
filtering the first and second secondary light being effected from the primary light and modified by the Bragg wavelength of the fiber Bragg grating depending on the mechanical quantity, by use of an optical filter device with a rising and a falling filter gradient, wherein
the Bragg wavelength of the first fiber Bragg grating lies in a range of the rising filter gradient of the optical filter device and the Bragg wavelength of the second fiber Bragg grating lies in a range of the falling filter gradient of the optical filter device;
determining the intensities of the filtered first and second secondary light;
evaluating the determined intensities of the filtered first and second secondary light, wherein the evaluating of the determined intensities of the filtered first and second secondary light comprises a summation of the intensity of the first secondary light and of the intensity of the second secondary light; and
determining the mechanical quantity from the intensity evaluation.

**2.** Method according to Claim 1, wherein the first and second secondary light modified by the mechanical quantity is optically filtered on symmetrical rising and falling filter gradients.

**3.** Method according to Claim 1 or 2, wherein the determined intensities are summed up mathematically or upon the detection, particularly wherein an average value is calculated, further particularly wherein if appropriate a weighting of the average value is performed.

**4.** Method according to at least one of the preceding claims, wherein the primary light is intensity modulated before irradiation of the fiber Bragg grating.

**5.** Method according to at least one of the preceding claims, wherein a spectral sum signal of the first fiber Bragg grating and the at least second fiber Bragg grating is used.

**6.** Fiber optic measurement apparatus for compensated determination of a mechanical quantity, comprising:

a first and at least a second fiber Bragg grating, each having a respective Bragg wavelength dependent on the applied mechanical quantity wherein the first and at least second fiber Bragg grating is disposed to be affected by essentially an equal measure with a quantity (A) and affected by an unequal measure with the mechanical quantity;
a primary light source for irradiating the fiber Bragg grating with primary light;
an optical filter device for filtering the first and second secondary light being effected from the primary light and modified by the Bragg wavelength and exiting the first and second fiber Bragg grating, wherein
the optical filter device has at least one rising and at least one falling filter gradient, and wherein
the Bragg wavelength of the first fiber Bragg grating lies in the range of the rising filter gradient of the optical filter device and the Bragg wavelength of the second fiber Bragg grating lies in the range of the falling filter gradient of the optical filter device; and
an optical detection device for determining the intensities of the filtered first and second secondary light; and
an evaluation unit for evaluating the determined intensities of the filtered first and second secondary light and for determining the mechanical quantity from the intensity evaluation, wherein the evaluation unit and/or the optical detection unit is adapted for a summation of the intensity of the first secondary light and of the intensity of the second secondary light.

**7.** Fiber optic measurement apparatus according to Claim 6, wherein the optical filter device has symmetrical rising and falling filter gradients.

**8.** Fiber optic measurement apparatus according to Claim 6 or 7, further comprising at least one arrangement adapted for distributing the secondary light outputted from the first and second fiber Bragg gratings to two separate optical axes or fiber strands.

**9.** Fiber optic measurement apparatus according to Claim 8, wherein the optical filter device has two separate optical filter devices corresponding to the fiber Bragg gratings and arranged in the separate fiber strands with filter gradients of different slope.

**10.** Fiber optic measurement apparatus according to at least one of Claims 6 to 9, wherein the optical filter device comprises an optical filter which is selected from a group consisting of a thin film filter, a fiber Bragg grating, an LPG, an arrayed waveguide grating (AWG), an echelle grating, a grating arrangement, a prism, an interferometer, and any combination thereof.

**11.** Fiber optic measurement apparatus according to at least one of Claims 8 to 10, wherein the optical detection device for determining the intensities of the filtered first and second secondary light has separate optical detectors dedicated to each fiber strand for the first and second filtered secondary light.

**12.** Fiber optic measurement apparatus according to at least one of Claims 6 to 11, wherein a spectral sum signal of the first fiber Bragg grating and the at least second fiber Bragg grating is used.

**Revendications**

**1.** Procédé de compensation d'un système de mesure optique à fibres conçu pour l'acquisition d'une grandeur mécanique, comprenant :

la mise à disposition, dans le système de mesure optique à fibres, d'un premier et d'au moins un deuxième réseau de Bragg à fibres, lesquels présentent chacun une longueur d'onde de Bragg ;
l'irradiation des réseaux de Bragg à fibres avec une lumière primaire ;
l'application, sur le premier et le deuxième réseau de Bragg à fibres, de la grandeur mécanique de telle façon que les longueurs d'onde de Bragg des réseaux de Bragg à fibres soient modifiées par la grandeur mécanique, sachant que le premier et l'au moins un deuxième réseau de Bragg à fibres sont sensiblement influencés dans une même mesure par une grandeur (A) et sont influencés dans une mesure différente par la grandeur mécanique (B) ;

le filtrage d'une première et d'une deuxième lumière secondaire engendrées par la lumière primaire et modifiées par la longueur d'onde de Bragg des réseaux de Bragg à fibres en fonction de la grandeur mécanique moyennant un dispositif de filtre optique à flanc de filtre ascendant et descendant, sachant que

la longueur d'onde de Bragg du premier réseau de Bragg à fibres se situe au niveau du flanc de filtre ascendant et la longueur d'onde de Bragg du deuxième réseau de Bragg à fibres se situe au niveau du flanc de filtre descendant du dispositif de filtre optique ;

l'acquisition des intensités de la première et de la deuxième lumière secondaire filtrées ;

l'évaluation des intensités acquises de la première et de la deuxième lumière secondaire filtrées, sachant que l'évaluation des intensités acquises de la première et de la deuxième lumière secondaire filtrées comprend une totalisation de l'intensité de la première lumière secondaire et de l'intensité de la deuxième lumière secondaire ; et

la détermination de la grandeur mécanique à partir de l'évaluation d'intensité.

2. Procédé selon la revendication 1, sachant que la première et la deuxième lumière secondaire modifiées par la grandeur mécanique sont optiquement filtrées sur des flancs de filtre ascendant et descendant symétriques.

3. Procédé selon l'une des revendications 1 ou 2, sachant que les intensités acquises sont totalisées mathématiquement ou lors de la détection, en particulier sachant qu'une valeur moyenne est calculée, en outre en particulier sachant qu'une pondération de la valeur moyenne est effectuée le cas échéant.

4. Procédé selon au moins l'une des revendications précédentes, sachant que la lumière primaire est modulée en intensité avant l'irradiation des réseaux de Bragg à fibres.

5. Procédé selon au moins l'une des revendications précédentes, sachant qu'un signal de totalisation spectral du premier réseau de Bragg à fibres et de l'au moins un deuxième réseau de Bragg à fibres est utilisé.

6. Dispositif de mesure optique à fibres pour l'acquisition compensée d'une grandeur mécanique, comprenant :

un premier et au moins un deuxième réseau de Bragg à fibres, lesquels présentent chacun une longueur d'onde de Bragg dépendante de la grandeur mécanique appliquée, sachant que le premier et l'au moins un deuxième réseau de Bragg à fibres sont disposés pour être sensiblement influencés dans une même mesure par une grandeur (A) et être influencés dans une mesure différente par la grandeur mécanique ;

une source de lumière primaire pour l'irradiation des réseaux de Bragg à fibres avec une lumière primaire ;

un dispositif de filtre optique pour le filtrage d'une première et d'une deuxième lumière secondaire engendrées par la lumière primaire et modifiées par les longueurs d'onde de Bragg, sortant du premier et du deuxième réseau de Bragg à fibres, sachant que

le dispositif de filtre optique présente au moins un flanc de filtre ascendant et au moins un flanc de filtre descendant, et sachant que

la longueur d'onde de Bragg du premier réseau de Bragg à fibres se situe au niveau du flanc de filtre ascendant et la longueur d'onde de Bragg du deuxième réseau de Bragg à fibres se situe au niveau du flanc de filtre descendant du dispositif de filtre optique ; et

un dispositif de détection optique pour l'acquisition des intensités de la première et de la deuxième lumière secondaire filtrées ;

une unité d'évaluation pour l'évaluation des intensités acquises de la première et de la deuxième lumière secondaire filtrée et pour la détermination de la grandeur mécanique à partir de l'évaluation d'intensité, sachant que l'unité d'évaluation et/ou l'unité de détection optique sont adaptées pour une totalisation de l'intensité de la première lumière secondaire et de l'intensité de la deuxième lumière secondaire.

7. Dispositif de mesure optique à fibres selon la revendication 6, sachant que le dispositif de filtre optique présente des flancs de filtre ascendant et descendant symétriques.

8. Dispositif de mesure optique à fibres selon la revendication 6 ou 7, comprenant en outre au moins un agencement qui est adapté pour la répartition de la première et de la deuxième lumière secondaire sortant du premier et du deuxième réseau de Bragg à fibres sur deux axes optiques ou faisceaux de fibres séparés.

9. Dispositif de mesure optique à fibres selon la revendication 8, sachant que le dispositif de filtre optique présente deux unités de filtre optiques séparées, as-

ciées aux réseaux de Bragg et disposées dans les faisceaux de fibres séparés, à flancs de filtre de pente différente.

10. Dispositif de mesure optique à fibres selon au moins l'une des revendications 6 à 9, sachant que le dispositif de filtre optique comprend un filtre optique qui est sélectionné dans le groupe constitué par un filtre à couche mince, un réseau de Bragg à fibres, un LPG, un réseau sélectif planaire (Arrayed Waveguide Grating, AWG), un réseau échelle, un agencement de réseaux, un prisme, un interféromètre, et toute combinaison de ceux-ci.

11. Dispositif de mesure optique à fibres selon au moins l'une des revendications 8 à 10, sachant que le dispositif de détection optique présente, pour l'acquisition des intensités de la première et de la deuxième lumière secondaire filtrées, des détecteurs optiques séparés associés aux faisceaux de fibres pour la première et la deuxième lumière secondaire filtrées.

12. Dispositif de mesure optique à fibres selon au moins l'une des revendications 6 à 11, sachant qu'un signal de totalisation spectral du premier réseau de Bragg à fibres et de l'au moins un deuxième réseau de Bragg à fibres est utilisé.

**FIG. 1**

**FIG. 2**

**FIG. 3**

FIG. 4

**FIG. 5**

501 START

502 Bereitstellen, in dem faseroptischen Messsystem, eines ersten und mindestens eines zweiten Faser-Bragg-Gitters, welches jeweils eine Bragg-Wellenlänge aufweist

503 Bestrahlen der Faser-Bragg-Gitter mit Primärlicht

504 Beaufschlagen der ersten und zweiten Faser-Bragg-Gitter mit der mechanischen Größe derart, dass die Bragg-Wellenlängen der Faser-Bragg-Gitter durch die mechanische Größe verändert werden

505 Filtern von durch das Primärlicht hervorgerufenem und durch die Bragg-Wellenlänge der Faser-Bragg-Gitter in Abhängigkeit von der mechanischen Größe modifiziertem ersten und zweiten Sekundärlicht mittels einer optischen Filtereinrichtung mit einer ansteigenden und einer abfallenden Filterflanke, wobei die Bragg-Wellenlänge des ersten Faser-Bragg-Gitters im Bereich der ansteigenden Filterflanke und die Bragg-Wellenlänge des zweiten Faser-Bragg-Gitters im Bereich der abfallenden Filterflanke der optischen Filtereinrichtung liegt

506 Erfassen der Intensitäten des gefilterten ersten und zweiten Sekundärlichts

507 Auswertung der erfassten Intensitäten des gefilterten ersten und zweiten Sekundärlichts

508 Bestimmen der mechanischen Größe aus der Auswertung der Intensitäten

509 ENDE

## FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02090893 A1